# EUROPEAN PATENT APPLICATION

(11) **EP 2 993 668 A1**
(43) Date of publication of application: **09.03.2016**
(21) Application number: 14306377.4
(22) Date of filing: 08.09.2014
(51) Int. Cl.: G11B 27/034, G11B 27/10, G11B 27/28, G06F 17/30

(54) **Method for editing an audiovisual segment and corresponding device and computer program product**

(71) Applicant: Thomson Licensing, 92130 Issy-les-Moulineaux (FR)
(72) Inventor: Demarty, Claire-Hélène, 35576 Cesson-Sévigné (FR); Thudor, Franck, 35576 Cesson-Sévigné (FR); Demoulin, Vincent, 35576 Cesson-Sévigné (FR)
(74) Representative: Huchet, Anne

(57) **Abstract**

The present invention concerns a method for editing an audiovisual segment from a plurality of pieces of audiovisual content related to an event. The method comprises the steps of:
a) selecting (S1), among said plurality of pieces of audiovisual content, an audiovisual segment, called reference segment, associated to at least a part of said event,
b) determining (S2), among said plurality of pieces of audiovisual content, audiovisual segments temporally synchronized with said reference segment,
c) determining (S3), among the reference segment and the synchronized audiovisual segments, a first audiovisual segment based on at least one video feature,
d) determining (S4), among the reference segment and the synchronized audiovisual segments, a second audiovisual segment based on at least one first audio feature, and
e) generating (S5) the edited audiovisual segment from the video data of the first audiovisual segment and the audio data of the second audiovisual segment.

## Description

### 1. Technical Field

The present invention relates generally to the field of the edition of audiovisual segments from a plurality of audiovisual contents. More specifically, the invention concerns a method for editing an audiovisual segment from a plurality of pieces of audiovisual content related to a same event and a system for implementing said method.

### 2. Background Art

Today, with the availability of more and more digital devices, more and more video films are captured by people attending to an event like a wedding or a show. All these pieces of video content constitute a database wherein raw video material can be found to create a film on this event.

Such an event is made up of a succession of parts (or time periods). For example, in the case of a wedding, the successive parts can be the main steps of the wedding: the town hall ceremony, the church ceremony, the lunch... All the videos taken by different people attending to the wedding can be thus used for editing a film on the wedding or on a part of it. They also can be used for building a summary of the wedding.

The invention relates to the edition of an audiovisual segment on an event or on a part of it. The edition process requires the selection of at least one audiovisual segment from the set of videos taken during the event. This selection is subjective when it is made manually by the user. Generally, the user (or editor) views all the videos and chooses one audiovisual segment among all the audiovisual segments of the videos. The choice can also be made based on metadata associated to the videos. In all these cases, this "manual" selection takes a lot of time. In addition, this selection is not so easy to implement since it has to be as informative as possible for the end user according to audio and video criteria.

Automatic methods based on audio or video analysis exist. Some methods propose to select audiovisual segments based on audio features. Segments having interesting audio data are selected. But these segments can show nothing interesting on their video channel. In the same manner, the selection of audiovisual segments based on video features can provide segments with no audio interesting information. In addition, the video analysis requires time.

The problem is therefore to ensure that the selected audiovisual segment contains interesting information on both audio and video parts.

It would hence be desirable to provide a method for editing an audiovisual segment showing improvements of the prior art.

Notably, it would be desirable to provide such a method, which generates an audiovisual segment from a plurality of pieces of audiovisual content, said audiovisual segment having visual and audio information of interest according to some predefined audio and video criteria.

It would be desirable to provide such a method having reduced computation time over the prior art.

### 3. Summary of Invention

According to the invention, it is proposed a method for editing an audiovisual segment from a plurality of pieces of audiovisual content related to an event, each audiovisual segment comprising audio data and video data, said method comprising the steps of:
a) selecting, among said plurality of pieces of audiovisual content, an audiovisual segment, called reference segment, associated to at least a part of said event,
b) determining, among said plurality of pieces of audiovisual content, audiovisual segments temporally synchronized with said reference segment,
c) determining, among the reference segment and the synchronized audiovisual segments, a first audiovisual segment based on at least one video feature,
d) determining, among the reference segment and the synchronized audiovisual segments, a second audiovisual segment based on at least one first audio feature, and
e) generating the edited audiovisual segment from the video data of the first audiovisual segment and the audio data of the second audiovisual segment.

Thus, according to the invention, the edited audiovisual segment is a mix of the video data of an audiovisual segment selected based on video features and the audio data of an audiovisual segment selected based on audio features. Therefore, the edited audiovisual segment comprises audio and video information of interest.

In addition, video analysis and audio analysis required to determine first and second audiovisual segments are only applied to a reduced part of the segments of the plurality of audiovisual contents. They are only applied to the audiovisual segments synchronized to a selected reference segment. It allows reducing computation time of the method and especially the video analysis time.

In a specific embodiment, the reference segment is selected by a user in step a).

In a variant, the reference segment is selected in step a) based on at least one second audio feature.

In a specific embodiment, in step d), the second audiovisual segment is selected among the reference segment and the first audiovisual segment. It helps to further reduce the computation time.

In a specific embodiment, said at least one video feature belongs to the group of said video features:
- the average motion activity of the video data of audiovisual segment,
- the saliency value of the video data of the audiovisual segment,
- esthetics information in the video data of the audiovisual segment,
- the contrast and/or blur and/or luminosity level of the video data of the audiovisual segment,
- the presence of persons or faces or objects in the video data of the audiovisual segment,
- the presence or absence of specific persons or faces or objects in the video data of the audiovisual segment.

In a specific embodiment, said at least one audio first feature and said at least one second audio feature belong to the group of said audio features:
- the energy of the audio data of the audiovisual segment,
- the zero crossing rate of the audio data of the audiovisual segment,
- the flatness or asymmetry of the audio data of the audiovisual segment,
- the presence or absence of specific audio events (laughs, applause, speech, speech from a given person, noise, etc.) in the audio data of the audiovisual segment,
- the Mel Frequency Ceptral Coefficients computed on the audio data of the audiovisual segment.

These audio features may also be any other multi-dimensional audio features that may help to select some best audio segment.

The invention also relates to a device for editing an audiovisual segment from a plurality of pieces of audiovisual content related to an event, each audiovisual segment comprising audio data and video data, said device comprising a processor configured for:
a) selecting, among said plurality of pieces of audiovisual content, an audiovisual segment, called reference segment, associated to at least part of said event,
b) determining, among said plurality of pieces of audiovisual content, audiovisual segments temporally synchronized with said reference segment,
c) determining, among the reference segment and the synchronized audiovisual segments, a first audiovisual segment based on at least one video feature,
d) determining, among the reference segment and the synchronized audiovisual segments, a second audiovisual segment based on at least one first audio feature, and
e) generating the edited audiovisual segment from the video data of the first audiovisual segment and the audio data of the second audiovisual segment.

The invention also relates to a a computer program product comprising a plurality of program code portions for carrying out the steps of the method as defined hereinabove, when said program is executed by a computer.

### 4. Brief description of the drawings

The invention can be better understood with reference to the following description and drawings, given by way of example and not limiting the scope of protection, and in which
- Figure 1 is a flow chart of the successive steps implemented when performing the method for editing an audiovisual segment according to the invention,
- Figure 2 is a schematic view illustrating a device for editing an audiovisual segment according to a specific and non-limitative embodiment of the invention, and
- Figure 3 is an exemplary architecture of the device of Figure 2 according to a specific and non-limitative embodiment of the invention.

### 5. Description of embodiments

The present invention proposes a method for editing an audiovisual segment (or audiovisual segment) representative of an event or a part of it. The event can be a weeding, a show, a meeting ...The invention will be described through the example of the weeding but it will be of course applicable to other events.

The present description describes a method for editing an audiovisual segment representative of a part of the wedding, for example the town hall ceremony or the lunch, from all the videos taken by the attendees to the wedding. If plural audiovisual segments representative of the whole day of the wedding, the method of the invention is repeated for each main part of the wedding.

The videos captured by the attendees to the wedding constitute the database from which audiovisual segments representative of the wedding or a part of it can be edited.

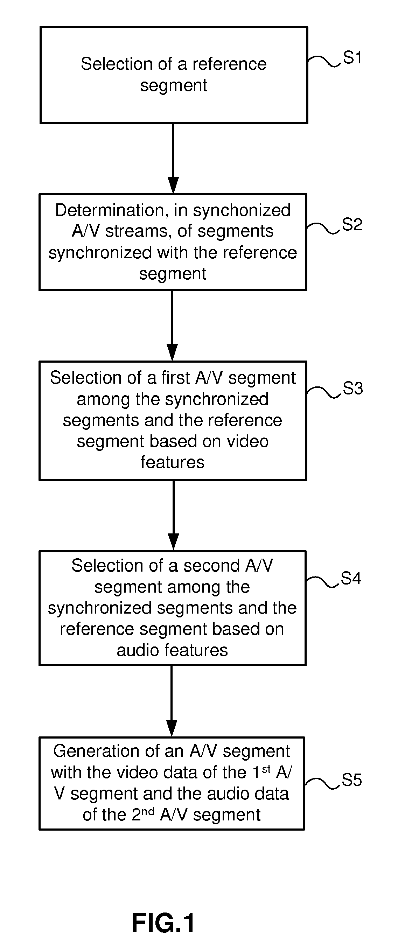

Figure 1 shows the different steps of the method according to the invention. In a step S1, the event or part of event is first selected by selecting an audiovisual segment, called reference segment, in one of the pieces of audiovisual content of the database. If the audiovisual segment to be edited relates to the town hall ceremony, a reference segment showing this ceremony or part of this ceremony is selected. If the reference segment shows only a part of this ceremony, the whole process described here may be repeated for other parts of the ceremony.

This reference segment may be selected manually by the editor. In a variant, the reference segment is selected based on an audio feature. As an example the reference segment may correspond to the segment with the highest audio energy. Indeed, one may expect that such a segment will be the one with the best audio information. In a step S2, audiovisual segments temporally synchronized with the reference segment are selected in the pieces of audiovisual content of the database. For this step, the pieces of audiovisual content of the database have to be synchronized with reference to each other. This can be done using techniques such as the one presented in the paper "A Scalable Framework for Joint Clustering and Synchronizing MultiCamera Videos", A. Bagri, F, Thudor, A.Ozerov, P.Hellier, Eusipco 2013. After this temporal synchronization, each piece of audiovisual content can be placed on an absolute common timeline of the event. This process is advantageously done offline.

These synchronized audiovisual segments and the reference segment are then computed in order to determine an audiovisual segment, called first audiovisual segment, having a high video-based level of interest. So this step of determination, called S3, is based on at least one video feature. Such a video-based level of interest can be computed for example by extracting simple video features such as an average motion activity value for each segment and/or a saliency value as disclosed in the patent application EP1695288 and/or some esthetics information as disclosed in the paper "Studying Aesthetics in Photographic Images Using a Computational Approach" R. Datta, D. Joshi, J. Li, and J .Z. Wang, ECCV (3)'06,2006, pp.288-301, and aggregating the extracted values, possibly after a normalization step, through a simple sum, for example. Other video features may be also used to determine a video-based level of interest:
- a contrast level and/or a blur level and/or a luminosity level in the video data of the audiovisual segment,
- the presence of persons or faces or objects in the video data of the audiovisual segment,
- the presence of specific persons or faces, for example grandma, uncle Joe..., or objects in the video data of the audiovisual segment,
- the absence of specific objects or faces of persons in the video data of the audiovisual segment, for example the horrible plant in the background.

The higher the resulting value, the greater the video-based level of interest for a given segment.

The step S3 consists in determining the synchronized segment with the higher value.

In a step S4, a second audiovisual segment is determined, among the reference segment and the synchronized audiovisual segments, based on at least one audio feature. To this end, the synchronized audiovisual segments and the reference segment are computed in order to select the audiovisual segment, called second audiovisual segment, having a high audio-based level of interest. Some interesting audio features are for example the energy or the zero crossing rate or the flatness or the asymmetry of the audio signal, the value of the Mel Frequency Ceptral Coefficients computed on the audio data of the audiovisual segment, the presence or absence of specific audio events, e.g. laughs, applause, speech, speech from a given person, noise, etc.

Energy, zero crossing rate, flatness, asymmetry are classic low level audio features that are simply extracted in common softwares such as Yafee (http://yaafe.sourceforge.net/features.html). Each of these features may be used alone or combined with others through a simple addition of their normalized value for example. The higher the resulting value, the greater the audio-based level of interest for a given segment. The selection S4 consists in determining the synchronized segment with the higher value.

In a final step, called S5, an audiovisual segment is generated from the video data of the first audiovisual segment and the audio data of the second audiovisual segment. The generated audiovisual segment is a mix of the first audiovisual segment and the second audiovisual segment. The generated audiovisual segment comprises the video data of the first audiovisual segment and the audio data of the second audiovisual segment. It is a mix of the best audio (segment having the higher audio-based level of interest) and the best video (segment having the higher video-based level of interest).

This generated audiovisual segment gives a better view point of the event than the reference segment.

These steps can be repeated for each part of the event. In case of the wedding, other reference segments can be edited for the other parts of the wedding, for example for the church ceremony and for the lunch. The steps S1 to S5 are thus repeated for each of these parts and a film or summary of the wedding can be edited from these reference segments.

This method can be implemented by a processor configured for carrying out the steps S1 to S5. Adapted user interface can be displayed to help the user to select the reference segment (step S1) and/or to select the video and audio features (steps S3 and S4) to be applied to the synchronized segment to determine the best video and the best audio.

This invention allows saving processing time in comparison to classical techniques based only on video features and better results compared to classical techniques based only on audio features.

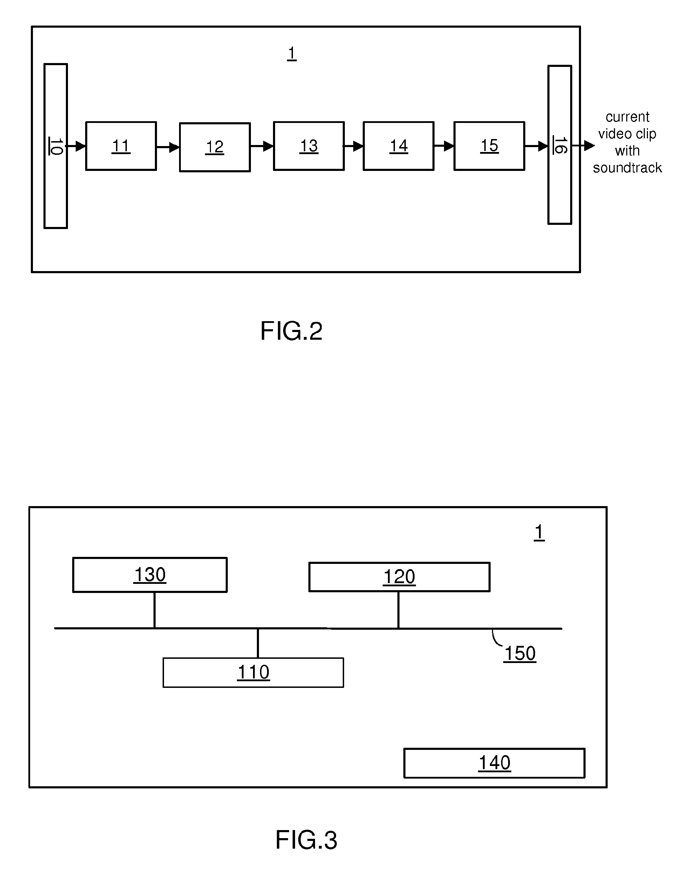

Figure 2 depicts a device 1 for editing an audiovisual segment according to a specific and non-limitative embodiment of the invention. The device 1 comprises an input 10 configured to receive all the pieces of audiovisual content related to an event. According to different embodiments of the invention, the source of these pieces of audiovisual content belongs to a set comprising:
- a local memory, e.g. a video memory, a RAM, a flash memory, a hard disk ;
- a storage interface, e.g. an interface with a mass storage, a ROM, an optical disc or a magnetic support;
- a communication interface, e.g. a wired interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

The input 10 is linked to a module 11 configured to select, among all these pieces of audiovisual content, an audiovisual segment, called reference segment, associated to at least a part of the event. The module 11 is advantageously connected to a screen for displaying a user interface when this selection is made manually by the user. The module 11 is linked to a module 12 configured for determining, among the plurality of pieces of audiovisual content, the audiovisual segments temporally synchronized with the reference segment.

The module 12 is linked to a module 13 for determining, among the synchronized audiovisual segments and the reference segment, a first audiovisual segment based on at least one predefined video feature. This video feature is possibly selected among a list of predefined video features, e.g the average motion activity / contrast level / blur level / luminosity level of the video data of audiovisual segment or the saliency value of the video data of the audiovisual segment computed by a predefined method- or the presence esthetics information in the video data of the audiovisual segment or- the presence of persons or faces or objects in the video data of the audiovisual segment or the presence or absence of specific persons or faces or objects in the video data of the audiovisual segment. The video feature(s) on which the video processing to be applied to the synchronized audiovisual segments is based can be selected via a user interface displayed on a screen. The first audiovisual segment is the synchronized audiovisual segment having the highest value according to the selected video features.

The module 13 is linked to a module 14 for determining, among the reference segment and the synchronized audiovisual segments, a second audiovisual segment based on at least one predefined audio feature. This audio feature is possibly selected among a list of predefined video features, e.g the energy, the zero crossing rate or the flatness or asymmetry of the audio data of the audiovisual segment, - the presence or absence of specific audio events (laughs, applause, speech, speech from a given person, noise, etc.) in the audio data of the audiovisual segment, or the value of the Mel Frequency Ceptral Coefficients computed on the audio data of the audiovisual segment. The audio feature(s) on which the video processing to be applied to the synchronized audiovisual segments is based can be selected via a user interface displayed on a screen. The second audiovisual segment is the synchronized audiovisual segment having the highest value according to the selected audio features.

The module 14 is linked to a module 15 for generating the edited audiovisual segment from the video data of the first audiovisual segment and the audio data of the second audiovisual segment.

The module 15 is linked to an output 16. The final audiovisual segment can be stored in a memory. As an example, it is stored in a remote or in a local memory, e.g. a video memory or a RAM, a hard disk.

Figure 6 represents an exemplary architecture of the device 1 according to a specific and non-limitative embodiment of the invention. The device 1 comprises one or more processor(s) 110, which is(are), for example, a CPU, a GPU and/or a DSP (English acronym of Digital Signal Processor), along with internal memory 120 (e.g. RAM, ROM, EPROM). The device 1 comprises one or several Input/Output device(s) 130 for inputting and/or outputting data and/or commands. These Input/output devices comprises for example a display device for displaying user interfaces helping the user to select the reference segment and/or the audio or video features to use in the steps S3 and S4 of the inventive method and input devices like e.g. a keyboard, a mouse, a touchpad, for entering commands. The modules 110, 120 and 130 are linked together via an address and data bus 150. The device 1 also comprises a power source 140 which may be external to the device 1. The device 100 may also comprise network interface(s) (not shown).

According to an exemplary and non-limitative embodiment of the invention, the device 1 further comprises a computer program stored in the memory 120. The computer program comprises instructions which, when executed by the device 1, in particular by the processor 110, make the device 1 carry out the method described in figure 1. According to a variant, the computer program is stored externally to the device 1 on a non-transitory digital data support, e.g. on an external storage medium such as a HDD, CD-ROM, DVD, a read-only and/or DVD drive and/or a DVD Read/Write drive, all known in the art. The device 1 thus comprises an interface to read the computer program. Further, the device 1 could access one or more Universal Serial Bus (USB)-type storage devices (e.g., "memory sticks.") through corresponding USB ports (not shown).

According to exemplary and non-limitative embodiments, the device 1 is a device, which belongs to a set comprising:
- a mobile device;
- a communication device;
- a game device;
- a tablet (or tablet computer);
- a laptop;
- a still picture camera;
- a video camera;
- an encoding chip;
- a decoding chip;
- a still picture server;
- a video server (e.g. a broadcast server, a video-on-demand server or a web server) ; and
- a video sharing platform.

The foregoing illustrates some of the possibilities for practicing the invention. Many other embodiments are possible within the scope of the invention. It is, therefore, intended that the foregoing description be regarded as illustrative rather than limiting, and that the scope of the invention is given by the appended claims together with their full range of equivalents.

## Claims

1. A method for editing an audiovisual segment from a plurality of pieces of audiovisual content related to an event, each audiovisual segment comprising audio data and video data, said method comprising the steps of:
a) selecting (S1), among said plurality of pieces of audiovisual content, an audiovisual segment, called reference segment, associated to at least a part of said event,
b) determining (S2), among said plurality of pieces of audiovisual content, audiovisual segments temporally synchronized with said reference segment,
c) determining (S3), among the reference segment and the synchronized audiovisual segments, a first audiovisual segment based on at least one video feature,
d) determining (S4), among the reference segment and the synchronized audiovisual segments, a second audiovisual segment based on at least one first audio feature, and
e) generating (S5) the edited audiovisual segment from the video data of the first audiovisual segment and the audio data of the second audiovisual segment.

2. Method according to claim 1, wherein, in step a), the reference segment is selected by a user.

3. Method according to claim 1, wherein, in step a), the reference segment is selected based on at least one second audio feature.

4. Method according to any one of previous claims, wherein, in step d), the second audiovisual segment is selected among the reference segment and the first audiovisual segment.

5. Method according to any one of previous claims, wherein said at least one video feature belongs to the group of said video features:
- the average motion activity of the video data of audiovisual segment,
- the saliency value of the video data of the audiovisual segment,
- esthetics information in the video data of the audiovisual segment,
- the contrast and/or blur and/or luminosity level of the video data of the audiovisual segment,
- the presence of persons or faces or objects in the video data of the audiovisual segment,
- the presence or absence of specific persons, faces or objects in the video data of the audiovisual segment.

6. Method according to any one of previous claims, wherein said at least one audio first feature and said at least one second audio feature belong to the group of said audio features:
- the energy of the audio data of the audiovisual segment,
- the zero crossing rate of the audio data of the audiovisual segment,
- the flatness or asymmetry of the audio data of the audiovisual segment,
- the presence or absence of specific audio events in the audio data of the audiovisual segment,
- the value of Mel Frequency Ceptstral coefficients computed on the audio data of the audiovisual segment.

7. Device for editing an audiovisual segment from a plurality of pieces of audiovisual content related to an event, each audiovisual segment comprising audio data and video data, **characterized in that** it comprises a processor configured for:
a) selecting, among said plurality of pieces of audiovisual content, an audiovisual segment, called reference segment, associated to at least part of said event,
b) determining, among said plurality of pieces of audiovisual content, audiovisual segments temporally synchronized with said reference segment,
c) determining, among the reference segment and the synchronized audiovisual segments, a first audiovisual segment based on at least one video feature,
d) determining, among the reference segment and the synchronized audiovisual segments, a second audiovisual segment based on at least one first audio feature, and
e) generating the edited audiovisual segment from the video data of the first audiovisual segment and the audio data of the second audiovisual segment.

8. A computer program product comprising a plurality of program code portions for carrying out the steps of the method according to any one of claims 1 to 6, when said program is executed by a computer.
